# EUROPÄISCHE PATENTSCHRIFT

(11) **EP 0 491 720 B1**
(45) Veröffentlichungstag und Bekanntmachung des Hinweises auf die Patenterteilung: **29.09.1993**
(21) Anmeldenummer: 90912357.2
(22) Anmeldetag: 16.08.1990
(51) Int. Cl.: B29C 49/00, B29C 35/00, B29C 33/36

(54) **CORRUGATOR IN MODULBAUWEISE**
MODULAR CORRUGATOR
MACHINE A ONDULER MODULAIRE

(30) Priorität: 11.09.1989 DE 3930318
(43) Veröffentlichungstag der Anmeldung: 01.07.1992
(73) Patentinhaber: FRÄNKISCHE ROHRWERKE, GEBR. KIRCHNER GmbH & Co., D-97486 Königsberg (DE)
(72) Erfinder: WEPPERT, Rainer, D-8728 Hassfurt (DE); HENNINGER, Gerhard, D-8616 Oberhaid (DE)
(74) Vertreter: Schwabe - Sandmair - Marx
(86) Internationale Anmeldenummer: EP9001350
(87) Internationale Veröffentlichungsnummer: WO9103366

(56) Entgegenhaltungen:
- WO-A-85/01471
- DE-A- 2 552 774
- DE-B- 1 303 583
- FR-A- 2 117 838

## Beschreibung

Die Erfindung betrifft einen Corrugator zur Verrippung von Kunststoffrohren, mit zwei synchron umlaufenden Ketten von Formteilhälften, Führungsmitteln für die Formteilhälften mit einem Einlaufbereich, in dem die zugehörigen Formteilhälften zur Anlage aneinander gebracht werden, mit einem Formbereich, in welchem ein Mittelkanal zur Führung der aneinander anliegenden Formbacken vorgesehen ist, und mit einem Auslaufbereich, in welchem die Formteilhälften wieder voneinander getrennt werden, sowie mit Rücklaufführungen für die Formteilhälften auf dem Weg zwischen Auslauf- und Einlaufbereich, und mit Kühleinrichtungen zur Kühlung zumindest des Mittelkanals mit einem Kühlmedium.

Bei einem derartigen herkömmlichen Corrugator ist üblicherweise der Formbereich mit dem Mittelkanal von den auf dessen beiden Längsseiten angeordneten Rücklaufführungen getrennt. In Laufrichtung des Mittelkanals sind in dessen beiden Seitenwänden mäanderförmige Kühlmittelkanäle vorgesehen, und die Abdichtung nach außen erfolgt durch geeignete Dichtungsmittel und eine außen angeordnete Platte an jeder der beiden Längsseiten. Die Kühlkanäle sind verhältnismäßig kompliziert und daher teuer in der Herstellung; hierzu tragen auch die erforderlichen Dichtungen bei. Weiterhin ist das Einrichten eines derartigen Corrugators verhältnismäßig arbeitsaufwendig. Dies liegt im wesentlichen daran, daß der Mittelkanal und jede der beiden Rücklaufführungen getrennt ausgerichtet werden müssen.

Falls die Rücklaufführungen ebenfalls gekühlt werden sollen, sind auch in den entsprechenden Wänden der Rücklaufführungen mäanderförmige Kühlmittelkanäle vorzusehen, und diese müssen - ebenso wie bei dem Mittelkanal - über geeignete Dichtmittel und eine äußere Platte abgedichtet werden. Hierdurch wird der herkömmliche Corrugator noch aufwendiger in der Herstellung und schwieriger in der Handhabung.

Der Mittelkanal bei bekannten Corrugatoren unterliegt einem verhältnismäßig starken Verschleiß, da die Lauffläche für die Formteilhälften, welche in dem Mittelkanal aneinander angedrückt werden, den bei der Herstellung der Verrippung auftretenden Kräften (hervorgerufen durch den überdruck im Inneren des Kunststoffrohres) unterworfen sind.

Weiterhin ist die bekannte Corrugatoranordnung in der Hinsicht wenig flexibel, daß sich durch den festgelegten Querschnitt-und die festgelegte Form der Kühlmittelkanäle die Kühlleistung nur schwer in einem größeren Bereich variieren läßt. Dies ist besonders dann von Nachteil, wenn häufiger ein Wechsel des jeweils eingesetzten Kunststoffes erfolgt.

Weiterhin ist bereits ein Corrugator vorgeschlagen worden, der einen sehr kompliziert geformten unteren Teil und einen hierauf zur Dichtung aufgelegten Deckel aufweist. Jeweils im wesentlichen U-förmig sind in dem Unterteil in der Mitte der Mittelkanal, jeweils außen beidseitig durch eine Wand getrennt ein Hohlraum mit jeweils einer darin angeordneten Spritzkühleinrichtung für den Mittelkanal und, wiederum über eine Wand getrennt, außen die beiden Rücklaufführungen vorgesehen. Diese fünf nebeneinander liegenden, nach oben offenen Räume werden durch den gemeinsamen Deckel mit geeigneten Dichtungsmitteln abgedichtet, so daß die Räume nach oben abgeschlossen werden.

Zwar entfallen aufgrund der Spritzkühlung für den Mittelkanal die bislang erforderlichen Kühlmittelkanäle, jedoch ist der genannte Unterteil nur mit sehr hohen Kosten herzustellen. Die zahlreichen Dichtungsstellen zwischen dem Deckel und dem Unterteil führen dazu, daß entweder sehr aufwendige Maßnahmen für die Abdichtung getroffen werden müssen oder aber die Betriebssicherheit leidet.

Bei dem wie voranstehend beschrieben relativ hohen Verschleiß des Mittelkanals müssen der gesamte untere Teil und der Deckel ausgetauscht werden, da beide Teile den Mittelkanal bilden.

Der Erfindung liegt die Aufgabe zugrunde, einen Corrugator zur Verfügung zu stellen, der einfacher aufgebaut und einfacher handhabbar ist.

Der vorliegenden Erfindung liegt die Erkenntnis zugrunde, daß sich der Mittelkanal durch Aneinandersetzen zweier Halbkanäle ausbilden läßt, wobei derartige Halbkanäle entweder eine Hälfte eines Mittelkanals oder aber eine Rücklaufführung bilden können.

Die Aufgabe wird gemäß der vorliegenden Erfindung durch einen eingangs angegebenen gattungsgemäßen Corrugator gelöst, welcher modular aufgebaut ist und zu diesem Zwecke mehrere Hohlprofil-Module zur Ausbildung des Formbereichs aufweist, von denen jedes Modul mit einem Hohlraum für die Kühlung sowie mit zwei Seitenführungen versehen ist, jeweils zwei Module paarweise quer zur Produktionsrichtung des Corrugators aneinander angeordnet sind, die aneinander anschließenden Seitenführungen eines Modulpaars einen Abschnitt des Mittelkanals bilden und die außenliegenden Seitenführungen des Modulpaares die Rücklaufführungen dieses Abschnitts bilden, und in Produktions - richtung des Corrugators mehrere Modulpaare wiederum aneinander anschließend hintereinander angeordnet sind.

Der Corrugator gemäß der vorliegenden Erfindung bietet zahlreiche Vorteile. Zunächst einmal stellt jedes Modul ein verhältnismäßig kleines, einfach herstellbares und gut handhabbares Bauteil dar. Aufgrund der Ausbildung jedes Moduls als Hohlprofil mit einem Hohlraum und zwei Seitenführungen läßt sich jedes Modul beispielsweise als Gußteil herstellen, wobei nach dem Guß eine entsprechende Feinbear-beitung der Laufbahnoberflächen für die Formteilhälften erfolgt.

Die Formgebung der erfindungsgemäßen Hohlprofil-Module als Hohlprofile gestattet es, verhältnismäßig dünne Wandstärken vorzusehen, wodurch der Materialaufwand verringert, die Herstellung erleichtert und die Handhabbarkeit verbessert wird.

Da der Hohlraum für eine grundsätzlich frei wählbare Kühleinrichtung ohnehin an sich geschlossen ist, werden die beim Stand der Technik bestehenden Dichtungsprobleme bezüglich der Kühlung erheblich geringer, da nur noch zwei aneinanderstoßende Module gegeneinander abgedichtet werden müssen.

Ein besonderer Vorteil des erfindungsgemäßen Corrugators liegt jedoch darin, daß die Seitenführungen jedes Moduls wahlweise zur Ausbildung des Mittelkanals und zur Bereitstellung der Seitenführung dienen können. Zwei paarweise nebeneinander angeordnete Module bilden mit ihren einander zugewandten Seitenführungen den Mittelkanal aus, und die verbleibenden, äußeren Seitenführungen der beiden Module bilden die beiden Rücklaufführungen für die Formteilhälften. Wird nun ein vorbestimmter Verschleiß des derart gebildeten Mittelkanals erreicht, so werden die beiden Module voneinander getrennt, jeweils um 180° gedreht und wieder aneinander angelegt, wobei nun die bisher außen liegenden Seitenführungen innen liegen und einen neuen, praktisch noch keinem Verschleiß unterworfenen Mittelkanal bilden, während die beiden Seitenführungen, die bislang den Mittelkanal bildeten, nun jeweils außen liegen und die beiden Rücklaufführungen bilden, die in bezug auf Verschleiß verhältnismäßig unkritisch sind. Damit kann die Standzeit des Corrugators bezüglich des Verschleißes des Mittelkanals praktisch verdoppelt werden. Die Drehung der Module kann auch so erfolgen, daß die Module im Vergleich zur bisherigen Lage auf dem Kopf stehen - was bisher unten lag, liegt nun oben.

Weiterhin führt der modulare Aufbau des erfindungsgemäßen Corrugators zu einer erhöhten Flexibilität. Der Corrugator kann durch Abnehmen oder Zufügen von Modulpaaren einfach in seiner Länge, also seiner Längserstreckung in Produktionsrichtung, geändert werden. Hierdurch wird eine einfache Anpassung an die jeweils optimalen Bedingungen bezüglich des verwendeten Kunststoffes, der angestrebten Produktionsleistung und dergleichen erreicht. Aufgrund dieser Flexibilität läßt sich der Corrugator auch optimal an die jeweilige Länge unterschiedlicher Produkte anpassen, und dies verringert den Abfall erheblich.

Vorzugsweise beträgt die Länge jedes Moduls in Produktionsrichtung im wesentlichen ein ganzzahliges Vielfaches einer Einheitslänge. Dann läßt sich nämlich die Flexibilität in bezug auf die Längserstreckung des Corrugators noch weiter dadurch erhöhen, daß bei Bedarf ein Modul in Einheiten dieser Einheitslänge verkürzt wird; die Einheitslänge entspricht vorteilhafterweise der Länge einer Formteilhälfte.

Wie weiter voranstehend bereits ausgeführt wurde gestattet die erfindungsgemäße Ausbildung der Module aufgrund des Hohlraums für die Kühlung im Prinzip die Verwendung beliebiger Kühleinrichtungen. Besonders vorteilhaft ist allerdings eine Ausgestaltung der Erfindung, bei welcher in jedem Hohlraumkanal, der durch mehrere hintereinanderliegende Module gebildet wird, eine sich im wesentlichen über die gesamte Länge des Hohlraumkanals erstreckende Spritzkühleinrichtung vorgesehen ist, die das Kühlmedium an die Hohlraumwand spritzt, die an den Mittelkanal anschließt. Da - wie eingangs erwähnt - die Wandstärke der Hohlprofil-Module verhältnismäßig gering gewählt werden kann, ist ein guter Wärmeübergang zum Mittelkanal sichergestellt. Da sich bei einer Spritzkühleinrichtung durch entsprechende Dosierung des Kühlmediums die Kühlleistung in verhältnismäßig weiten Bereichen variieren läßt, führt dies zu einer verbesserten Flexibilität des gesamten Corrugators. Andererseits ist eine Spritzkühleinrichtung selbst verhältnismäßig einfach aufgebaut, und bei Bedarf kann daher eine Spritzkühleinrichtung gegen eine andere Spritzkühleinrichtung ausgetauscht werden, die etwa mit größeren und/oder mehr Ausspritzöffnungen versehen ist, wenn eine höhere Kühlleistung gewünscht wird. Eine "Spritzkühlung" soll in diesem Zusammenhang auch eine Sprüh- oder Kühleinrichtung oder dergleichen einschließen.

Insbesondere in Hinblick auf erhöhte Produktionsleistungen des erfindungsgemäßen Corrugators ist es von Vorteil, wenn die Spritzkühleinrichtung auch zum Spritzen des Kühlmediums an die der Rücklaufführung anschließende Wand oder Wände des Hohlraums ausgebildet ist. Dann werden nämlich die Formteilhälften beim Rücklauf gekühlt, wodurch sich eine höhere Produktionsleistung (Taktrate) erreichen läßt. Selbstverständlich kann die Spritzkühlung für den Mittelkanal auch unabhängig von der Spritzkühlung der Rücklaufführung ausgebildet werden, falls dies erwünscht wird, da der Hohlraum der Module hier dem Konstrukteur jegliche Freiheiten läßt.

Zur Verbesserung der Kühlung der Formteilhälften in den Rücklaufführungen sind diese vorteilhafterweise mit außen angebrachten Andruckvorrichtungen versehen, wodurch geschlossene Rücklaufführungskanäle ausgebildet werden; die Andruckvorrichtungen drücken die Formteilhälften in die Rücklaufführung und sorgen so für einen verbesserten Kontakt zur Erzielung einer besseren Kühlung.

Hierbei lassen sich die Andruckvorrichtung einfach als Platten ausbilden, die jeweils über zumindest eine Feder in Richtung auf die Rücklaufführung gedrückt oder gezogen werden. Die Abstimmung der Federkraft gestattet eine feinfühlige Anpassung in Hinblick auf eine optimale Kühlwirkung bei möglichst geringem Verschleiß der Rücklaufführungen. Statt der Feder kann auch eine geeignete pneumatische, hydraulische, magnetische Einrichtung oder dergleichen vorgesehen werden.

Weiter voranstehend wurde bereits angesprochen, daß der modulare Aufbau des erfindungsgemäßen Corrugators eine einfache Anpassung in Längenrichtung ermöglicht. Ein weiterer wichtiger Vorteil der modularen Anordnung besteht darüber hinaus in einer Teilbarkeit des Mittelkanals in Querrichtung, also quer zur Produktionsrichtung. Für diesen Fall wird nämlich einfach die eine Reihe in Produktionsrichtung des Corrugators hintereinander angeordneter Module von der entsprechenden, gegenüberliegenden Reihe getrennt, also quer zur Produktionsrichtung. Hierdurch wird eine einfache Inspektion und Wartung des Mittelkanals ermöglicht. Insbesondere bei derartigen Produktionsstörungen, bei denen der Corrugator zum Stillstand kam, während noch Kunststoff in den Corrugator eingeführt wurde, war nach dem Stand der Technik aufgrund der im wesentlichen geschlossenen Ausbildung des Mittelkanals eine Reinigung oder Reparatur mit hohem Zeitaufwand, entsprechend hohen Kosten und der Gefahr von Beschädigungen verbunden, insbesondere in Ansehung der langen Stillstandszeit des Corrugators. Bei dem erfindungsgemäßen Corrugator dagegen wird die eine Modulreihe von der anderen entfernt, und der Mittelkanal ist frei zugänglich. Zum gegenseitigen Andrücken der beiden Modulreihen während des Betriebes beziehungsweise zum Auseinanderfahren der beiden Modulreihen für Wartungs- und Inspektionsarbeiten wird vorteilhafterweise eine geeignete Einrichtung vorgesehen, welche im Betrieb die beiden Modulreihen aneinander andrückt, unter festlegbaren Bedingungen jedoch die beiden Modulreihen auseinander zieht. Dies kann beispielsweise pneumatisch, hydraulich oder mechanisch erfolgen.

Weiterhin läßt sich mit dem erfindungsgemäßen Corrugator auf einfache Weise eine sogennante Unterdruckformgebung der Kunststoffrohre erzielen. Hierzu wird zumindest die an den Mittelkanal angrenzende Hohlraumwand jedes Moduls mit einer oder mehreren Öffnungen versehen, und an den Hohlraum wird eine Einrichtung zur Erzeugung eines Unterdrucks in dem Hohlraum angeschlossen. Dann zieht der Unterdruck in dem Hohlraum über die Öffnungen das Kunststoffrohr nach außen. Um hierbei die Umschlagbarkeit der Module beibehalten zu können, also den Einsatz der Seitenführungen entweder für den Mittelkanal oder die Rücklaufführung, ist vorzugsweise die an die Rücklaufführung angrenzende Hohlraumwand dann ebenfalls mit einer oder mehreren Öffnungen versehen. Dies läßt sich dazu ausnutzen, durch den Unterdruck in dem Hohlraum die Formteilhälften in der Rücklaufführung an die Lauffläche der Hohlraumwand heranzuziehen; hierdurch lassen sich gegebenenfalls die Andruckmittel oder Andruckplatten für die Rücklaufführung einsparen. Um eine Verringerung der Reibung zwischen den Modulen und den Formteilhälften im Mittelkanal zu erreichen und so den Verschleiß, aber auch die erforderliche Antriebsleistung zu verringern, kann an derartige Öffnungen allein in den Modulen auch eine Einrichtung zur Erzeugung eines Überdrucks angeschlossen werden.

Wie bereits eingangs erwähnt lassen sich die erfindungsgemäßen Module auf einfache und kostengünstige Weise als Gußteile herstellen, vorzugsweise als Graugußteile.

Zwar ist der erfindungsgemäße Corrugator ohnehin aufgrund der voranstehend erwähnten Möglichkeit der Längsteilung der Modulreihen besonders wartungsfreundlich. Dennoch lassen sich gewisse Störfälle nicht ausschalten, etwa ein vollständiger Ausfall der Stromversorgung für eine Produktionsanlage aus Corrugator und zugeordnetem Extruder. Bei einem plötzlichen Stromausfall bleibt der Corrugator stehen, während der Extruder aufgrund des hohen Drucks noch plastisches Kunststoffrohr in den Corrugator einbringt, und dann erstarrt der Kunststoff in Einlaufbereich des Corrugators und muß mühsam wieder entfernt werden.

Zur Beseitigung dieses Problems ist gemäß einer weiteren vorteilhaften Ausgestaltung der Erfindung eine Entriegelungseinrichtung am Corrugator vorgesehen, die mit einer Kraftspeichereinrichtung versehen ist, die bei einer vorbestimmten Störfallbedingung ausgelöst wird und den Corrugator schnell von dem ihm zugeordneten Extruder entfernt. Die Kraftspeichereinrichtung kann beispielsweise ein Federspeicher, ein Druckluftspeicher oder dergleichen sein, sollte also ohne elektrische Energiezuführung arbeiten, und die Betätigung der Entriegelungseinrichtung erfolgt vorzugsweise auf ähnliche Weise oder durch Bereitstellung der zur Entriegelung erforderlichen Energie beispielsweise in einem Akkumultor.

Die Erfindung wird nachstehend anhand zeichnerisch dargestellter Ausführungsbeispiele näher erläutert, aus welchen Vorteile und Merkmale hervorgehen.

Es zeigen:
- Fig. 1: eine schematisch stark vereinfachte Seitenansicht eines Corrugators mit Einlaufblock, aus Modulen bestehendem Mittelteil und Auslaufblock;
- Fig. 2: einen vertikalen Querschnitt durch einen Corrugator gemäß einem Ausführungsbeispiel der vorliegenden Erfindung mit zwei nebeneinander liegenden Modulen, die zwischen sich einen Mittelkanal ausbilden;
- Fig. 3: einen vertikalen Querschnitt durch ein Modul gemäß Ausführungsbeispiel der vorliegenden Erfindung;
- Fig. 4: einen vertikalen Querschnitt durch einen Corrugator gemäß einem Ausführungsbeispiel der vorliegenden Erfindung mit zwei nebeneinander liegenden Modulen (ähnlich wie in Figur 2) mit mehr Einzelheiten;
- Fig. 5: eine Aufsicht auf den vorderen Bereich eines Corrugators gemäß Ausführungsbeispiel der vorliegenden Erfindung; und
- Fig. 6: eine Aufsicht auf einen Teilabschnitt eines Moduls gemäß Ausführungsbeispiel der vorliegenden Erfindung.

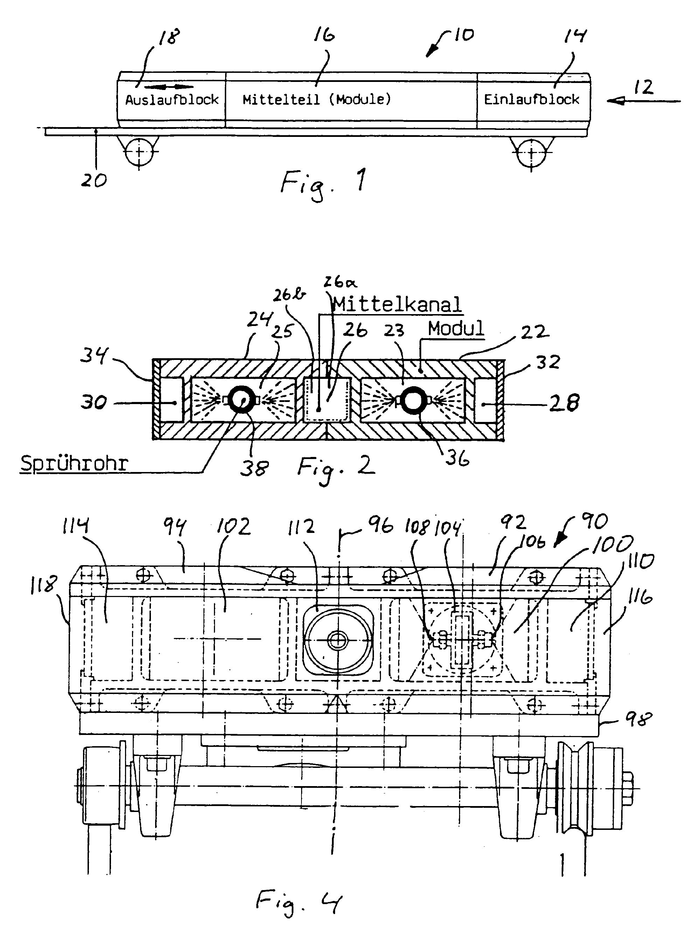

In Figur 1 sind schematisch stark vereinfacht die wesentlichen Hauptabschnitte eines Corrugators 10 gemäß der vorliegenden Erfindung dargestellt. In Richtung eines Pfeils 12 läuft von einem (nicht dargestellten) Extruder ein noch plastisches Kunststoffrohr in einen Einlaufblock 14 des Corrugators ein, läuft weiter durch einen Mittelteil 16, in welchem das Kunststoffrohr durch die Formgebung mittels Formteilen an seinem Außenumfang mit Rippen versehen wird, und verläßt den Corrugator 10 über einen Auslaufblock 18. Der Einlaufblock oder Einlaufbereich 14, der Mittelteil 16 und der Auslaufblock 18 sind gemeinsam auf einem Maschinentisch 20 des Corrugators 10 angeordnet.

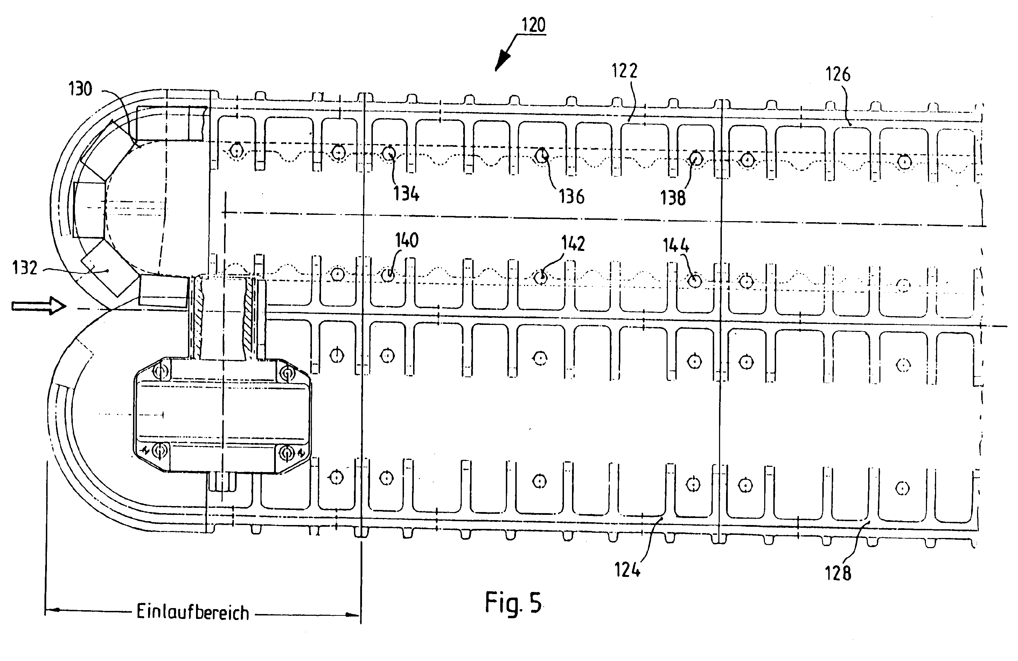

Die Wirkungsweise des Corrugators wird nachstehend noch eingehender im Zusammenhang mit Figur 5 erläutert.

Der in Figur 2 dargestellte Querschnitt durch zwei nebeneinander liegende Module des Mittelteils, wie er in Figur 1 mit der Bezugsziffer 16 bezeichnet ist, ist schematisch stark vereinfacht. Zwei nebeneinander angeordnete Module 22, 24 bilden zwischen sich einen Mittelkanal 26 aus, in dem die jeweils zugehörigen (nicht dargestellten) Formteilhäften zur Formgebung des Kunststoffrohres laufen. Die Rückführung der dann wieder getrennten Formteilhälften erfolgt außen in Rücklaufführungen 28, 30 der Module 22, 24.

Das Modul 22 ist als Hohlprofil ausgebildet und weist einen zentralen Hohlraum 23 auf, in welchem ein Sprührohr 36 vorgesehen ist, welches - wie durch die gestrichelten Linien angedeutet ist - ein Kühlmittel hauptsächlich an die Außenwände des Hohlraums sprüht, die an die Rücklaufführung 28 beziehungsweise die symmetrisch hierzu ausgeführte Führung 26a angrenzen. Die Rücklaufführung 28 ist nach außen durch eine Platte 32 abgeschlossen, welche von einer (nicht dargestellten) Feder in Richtung auf das Modul 22 gedrückt wird.

Das Modul 24 ist ebenso aufgebaut wie das Modul 22 und weist daher einen Hohlraum 25 mit darin angeordnetem Sprührohr 38 auf, eine Rücklaufführung 30 sowie die symmetrisch hierzu ausgebildete Führung 26b.

Die beiden Führungen 26a (des Moduls 22) und 26b (des Moduls 24) bilden zusammen den Mittelkanal 26. Die Führungen 26a, 28, 26b, 30 sind so ausgebildet, daß sie gegeneinander austauschbar sind. Beispielsweise könnte jedes der Module 22, 24 in Figur 2 um 180° gedreht werden, so daß sich dann die beiden Führungen 28, 30 gegenüberlägen und miteinander einen Mittelkanal ausbildeten. Dementsprechend würde die Rücklaufführung des Moduls 22 in diesem Fall durch die Führung 26a gebildet, und entsprechend die Rücklaufführung des Moduls 24 durch die Führung 26b.

Ebenso wie die Rücklaufführung 28 ist auch die Rücklaufführung 30 des Moduls 24 durch eine federbelastete Platte 34 nach außen abgeschlossen.

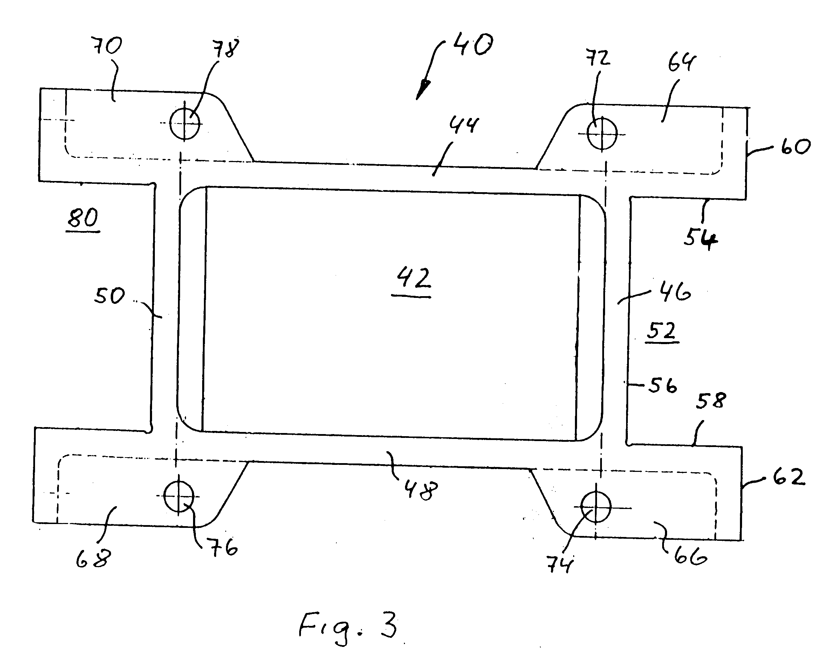

Figur 3 erläutert anhand eines Querschnitts durch ein Modul 40 genauer den Aufbau eines derartigen Moduls. Im Zentrum weist das Modul einen Hohlraum 42 auf, der von vier Wänden 44 (oben), 46 (rechts), 48 (unten) und 50 (links) umschlossen ist. Rechts ist eine Führung 52 für (nicht dargestellte) Formteilhälften vorgesehen und links eine Führung 80 in symmetrischer Anordnung. Die Führung 52 weist eine vertikale Führungsbahn 56, eine obere Führungsbahn 54 und eine untere Führungsbahn 58 auf. Dies ist bei der linken Führung 80 genauso, wobei zur Vereinfachung dort die Bezugsziffern weggelassen wurden. Die voranstehend erwähnte Drehung der Module kann etwa auch so erfolgen, daß die bisherige untere/obere Führungsbahn zur oberen/unteren Führungsbahn wird. Grundsätzlich ist eine Drehung eines Moduls um 180° um jede der drei Achsen möglich.

Das Modul 40 ist mit vier Stegen 64, 66, 68 und 70 versehen, wobei die Stege 64, 66 seitliche Anlageflächen 60 beziehungsweise 62 aufweisen, mit denen das Modul 40 an ein nicht dargestelltes weiteres Modul angelegt wird, welches korrespondierend ausgebildet ist. Die entsprechenden Anlageflächen an den Stegen 68, 70 sind nicht mit Bezugsziffern bezeichnet.

In den Stegen 64, 66, 68, 70 ist jeweils ein Durchgangsloch 72, 74, 76 beziehungsweise 78 vorgesehen. Diese Durchgangslöcher 72-78 dienen dazu, um zwei in einer Reihe (vergleiche Figur 5) anschließende Module miteinander zu verbinden, beispielsweise mittels Schrauben, die durch die Durchgangslöcher 72-78 ragen und mit jeweils einer Mutter festgezogen werden, so daß zwei hintereinander liegende Module fest gegeneinander verspannt sind.

Der Querschnitt gemäß Figur 4 zeigt die Anordnung zweier nebeneinanderliegender Module 92, 94 eines Corrugators 90 mit weiteren Einzelheiten.

An einer vertikalen Mittellinie 96 stoßen die beiden Module 92, 94 aneinander an. Die Module 92, 94 sind auf einem Maschinentisch 98 befestigt, wie nachstehend noch eingehender erläutert wird. Das Modul 92 weist einen Hohlraum 100 auf, in welchem ein Sprührohr 104 vorgesehen ist, welches einen Sprühkopf 106 und einen Sprühkopf 108 aufweist. Die Sprühkegel der Sprühköpfe 106, 108 sind durch strichpunktierte Linien angedeutet. Zur Außenseite des Moduls 92 hin ist ein Rückführkanal 110 angeoronet, der durch eine federbelastete Platte 116 nach außen abgeschlossen ist.

Das andere Modul 94 ist entsprechend aufgebaut und weist daher einen Hohlraum 102 auf, einen Rückführkanal 114 sowie eine diesen nach außen abschließende federbelastete Platte 118. Zur Vereinfachung ist ein Sprühkopf mit zugehörigen Einrichtungen in dem Hohlraum 102 des zweiten Moduls 94 nicht dargestellt.

Die beiden Module 92, 94 bilden zwischen sich einen Mittelkanal 112 aus, in welchem ein Rohr angedeutet ist.

Der Maschinentisch 98 wird durch nicht mit Bezugsziffern bezeichnete Einrichtungen wie eine Stangenführung, Laufbuchsen und dergleichen gehaltert. Entlang der vertikalen Mittellinie 96 erstreckt sich eine Trennebene, welche die Längstrennebene des Corrugators 90 definiert. Vorzugsweise ist eine Reihe der Module, beispielsweise die, welche das Modul 94 enthält, ortsfest angebracht, und die andere Reihe der Module, die also in diesem Fall das Modul 92 enthält, ist von der durch die Mittellinie festgelegten Trennebene verfahrbar ausgebildet. Die hierzu erforderlichen Einrichtungen sind nicht in Figur 4 dargestellt.

Die in Figur 5 dargestellte Aufsicht auf einen Corrugator 120 erläutert die Funktionsweise dieser Einrichtung. In Richtung des links in der Figur 5 gezeigten Doppelpfeils läuft ein Kunststoffrohr aus einem Extruder in den Einlaufbereich des Corrugators 120 ein. An den Einlaufbereich schließt sich ein erstes Paar von Modulen 122, 124 an, auf welches ein zweites Paar von Modulen 126, 128 in Produktionsrichtung des Corrugators 120 folgt. Für die eine Reihe von Modulen 122, 126, die in Längsrichtung des Corrugators 120 hintereinander angeordnet sind, ist schematisch stark vereinfacht ein Führungsmittel 130 für Formteilhälften dargestellt, von denen exemplarisch nur eine Formteilhälfte 132 in Figur 5 gezeigt ist. Eine derartige Formteilhälfte 132 läuft oben in Figur 5 im Rückführungsbereich von rechts nach links, durchläuft dann eine Kurve (im Bereich der Bezugsziffer 130) und läuft dann in Produktionsrichtung, also der Richtung des Doppelpfeils, in den Einlaufbereich ein.

Synchron hierzu läuft unten in Figur 5 eine entsprechende Formteilhälfte von rechts nach links, durchquert einen Halbkreis und läuft dann zusammen mit der anderen Formteilhälfte 132 in den Einlaufbereich ein, bis am Ende des Einlaufbereichs, also etwa kurz vor dem Eintritt in das Modulpaar 122, 124, jeweils zwei einander zugeordnete Formteilhälften sich zu einem Formteil vereinen, welches den im Mittelkanal laufenden, noch verformbaren Schlauch dazwischen einschließt und die Verrippung auf der Außenoberfläche des Kunststoffrohres bildet.

Beispielhaft für sämtliche Module sind für das Modul 122 in Figur 5 sechs Durchgangslöcher 134, 136, 138, 140, 142 und 144 dargestellt, mit deren Hilfe über (nicht dargestellte) Schrauben das Modul 122 auf einem Maschinentisch, beispielsweise dem Maschinentisch 98 von Figur 4, befestigt wird. Zwei hintereinander liegende Module, beispielsweise die Module 122 und 126 beziehungsweise die Module 124, 128, werden auf die im Zusammehang mit Figur 3 voranstehend erläuterte Art miteinander verbunden, also in Längsrichtung des Corrugators aneinander befestigt, während die Modulreihen 122, 126 beziehungsweise 124, 128 mittels Durchgangslöchern 134-144, wie sie stellvertretend für sämtliche Module bei dem Modul 122 gezeigt sind, auf dem Maschinentisch befestigt werden.

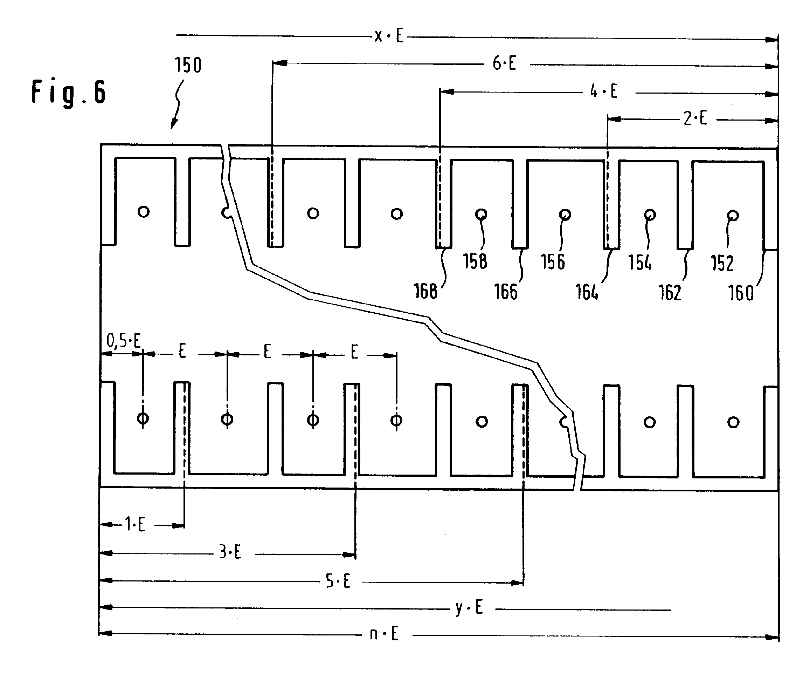

Figur 6 erläutert anhand einer Aufsicht auf einen Teil eines Moduls 150 die Ausbildung der erfindungsgemäßen Module.

Durchgangslöcher, von denen vier beispielhaft mit Bezugsziffern 152, 154, 156 beziehungsweise 158 bezeichnet sind, dienen zur Befestigung des Moduls 150 auf die im Zusammenhang mit dem Modul 122 voranstehend beschriebene Weise. Die übrigen Durchgangslöcher in Figur 6 sind nicht mit Bezugsziffern bezeichnet.

Weiterhin wird aus Figur 6 deutlich, daß jedes Modul auf seiner Oberseite Stege aufweist, von denen fünf exemplarisch mit den Bezugsziffern 160, 162, 164, 166 beziehungsweise 168 bezeichnet sind. Diese Stege entsprechen den im Querschnitt in Figur 3 gezeigten Stegen 64-70. Sie dienen einerseits zur Erhöhung der Formsteifigkeit des Moduls 150, und die jeweils am Ende angeordneten Stege, beispielsweise der Steg 160, zur Befestigung an dem endseitig vorgesehenen Steg des anschließenden Moduls.

Weiterhin wird aus Figur 6 deutlich, daß das Modul 150 ebenfalls modular aufgebaut ist. Während die Abstände "E" zwischen zwei benachbarten Durchgangslöchern, beispielsweise den Durchgangslöchern 152, 154, jeweils gleich sind, alterniert die Länge der zwischen zwei Stegen vorgesehenen unterschiedlich langen Abschnitte des Moduls 150.

Die Gesamtlänge des Moduls 150 ist im wesentlichen ein ganzzahliges (n) Vielfaches dieser Einheitslänge E, so daß sich, falls einmal eine Modullänge erforderlich ist, die geringer ist als die Länge dieses Moduls bei der Herstellung, das Modul in quer zu seiner Längserstreckung abgeschnitten werden kann, und zwar vorzugsweise jeweils in Einheiten der Einheitslänge E.

Die Ablängung eines Moduls erfolgt auf die in Fig. 6 angegebene Weise. Hierbei ist zu berücksichtigen, daß der Steg oder die Rippe, an welcher abgelängt wird, bearbeitet werden muß, um ein planes Anliegen zweier Module zu gewährleisten.

In Fig. 6 deuten die gestrichelten Linien die jeweilige Fläche an, die zum planen Anliegen an einem anderen Modul abgearbeitet wurde. Von der in Fig. 6 linken Seite her können daher alle ungeradzahligen Vielfachen einer Einheitslänge E abgelängt werden, und von rechts her alle geradzahligen Vielfachen.

## Patentansprüche

1. Corrugator zur Verrippung von Kunststoffrohren, mit
a) zwei synchron umlaufenden Ketten von Formteilhälften;
b.1) Führungsmitteln für die Formteilhälften mit
b.2) einem Einlaufbereich, in dem die zugehörigen Formteilhälften zur Anlage aneinander gebracht werden,
b.3) einem Formbereich, in welchem ein Mittelkanal zur Führung der aneinander anliegenden Formteilhälften vorgesehen ist, und
b.4) einem Auslaufbereich, in dem die Formteilhälften wieder voneinander getrennt werden;
c) Rücklaufführungen für die Formteilhälften auf dem Weg zwischen Auslauf- und Einlaufbereich; und
d) Kühleinrichtungen zur Kühlung zumindest des Mittelkanals mit einem Kühlmedium,
**gekennzeichnet** durch folgende Merkmale:
e.1) es sind mehrere Hohlprofil-Module (22, 24) zur Ausbildung des Formbereichs vorgesehen;
e.2) jedes Modul (22, 24) weist einen Hohlraum (23, 25) für die Kühlung auf,
e.3) und ist mit zwei Seitenführungen (28, 26a; 30, 26b) versehen;
f.1) jeweils zwei Module (22, 24) sind paarweise quer zur Produktionsrichtung des Corrugators aneinander angeordnet;
f.2) die aneinander anschließenden Seitenführungen (26a, 26b) eines Modulpaares (22, 24) bilden einen Abschnitt des Mittelkanals (26),
f.3) und die außen liegenden Seitenführungen (28, 30) des Modulpaares (22, 24) bilden die Rücklaufführungen dieses Abschnitts;
g) in Produktionsrichtung des Corrugators sind mehrere Modulpaare aneinander anschließend hintereinander angeordnet.

2. Corrugator nach Anspruch 1, dadurch **gekennzeichnet**, daß jedes Modul (40) derart symmetrisch ausgebildet ist, daß jede der beiden Seitenführungen (52, 80) wahlweise als Abschnitt des Mittelkanals oder als Abschnitt der Rücklaufführung dienen kann.

3. Corrugator nach Anspruch l oder 2, dadurch **gekennzeichnet,** daß die Länge (nE) jedes Moduls (150) in Produktionsrichtung im wesentlichen ein ganzzahliges Vielfaches (n) einer Einheitslänge (E) beträgt.

4. Corrugator nach mindestens einem der Ansprüche 1 bis 3, dadurch **gekennzeichnet,** daß je eine sich über im wesentlichen die gesamte Länge der parallel verlaufenden Hohlräume (23, 25) der Modulpaare (22, 24') erstreckende Spritzkühleinrichtung (36, 38) vorgesehen ist, welche das Kühlmedium im wesentlichen an die Hohlraumwand spritzt, die an den Mittelkanal (26) anschließt.

5. Corrugator nach Anspruch 4, dadurch **gekennzeichnet**, daß die Spritzkühleinrichtung (36, 38) auch zum Spritzen des Kühlmediums an die der Rücklaufführung (28, 30) anschließenden Wände des Hohlraums (23, 25) ausgebildet ist.

6. Corrugator nach Anspruch 5, dadurch **gekennzeichnet,** daß außen an den Rücklaufführungen (110, 114) Andruckvorrichtungen (116, 118) vorgesehen sind, welche die Formteilhälften in die Rücklaufführung drücken.

7. Corrugator nach Anspruch 6, dadurch **gekennzeichnet,** daß die Andruckvorrichtung als Platten (116, 118) ausgebildet sind, die jeweils über zumindest eine Feder angedrückt werden.

8. Corrugator nach mindestens einem der Ansprüche 1 bis 7, dadurch **gekennzeichnet,** daß die eine Reihe der in Produktionsrichtung hintereinander liegenden Module (122, 126) gegenüber der gegenüberliegenden anderen Reihe (124, 128) der Module verfahrbar ausgebildet ist.

9. Corrugator nach mindestens einem der Ansprüche 4 bis 8, dadurch **gekennzeichnet,** daß die an den Mittelkanal angrenzende Hohlraumwand mit einer oder mehreren Öffnung(en) versehen ist, und daß eine an den Hohlraum anschließbare Einrichtung zur Erzeugung eines Unterdrucks und/oder Überdrucks vorgesehen ist.

10. Corrugator nach mindestens einem der Ansprüche 4 bis 9, dadurch **gekennzeichnet,** daß die an die Rücklaufführung angrenzende Hohlraumwand mit einer oder mehreren Öffnung(en) versehen ist, und daß eine an den Hohlraum anschließbare Einrichtung zur Erzeugung eines Unterdrucks vorgesehen ist.

11. Corrugator nach mindestens einem der Ansprüche 1 bis 10, dadurch **gekennzeichnet,** daß die Module Gußteile, vorzugsweise Graugußteile, sind.

12. Corrugator nach mindestens einem der Ansprüche 1 bis 11, dadurch **gekennzeichnet,** daß eine Entriegelungseinrichtung vorgesehen ist, die mit einer Kraftspeichereinrichtung versehen ist, die bei einer vorbestimmten Störfallbedingung ausgelöst wird und den Corrugator von einem zugeordneten Extruder entfernt.

## Claims

1. Corrugator for ribbing plastic pipes, with
a) two synchronous circulating chains of mould halves;
b.1) guide means for the mould halves with
b.2) an input zone, in which the corresponding mould halves are brought into abutment with one another,
b.3) a moulding zone, in which a central channel for guiding the abutting mould halves is located, and
b.4) an output zone, in which the mould halves are separated from one another once again;
c) return guides for the mould halves on the path between the output zone and the input zone; and
d) cooling devices for cooling at least the central channel with a coolant,
characterised by the following features:
e.1) several hollow-section modules (22, 24) are provided to form the moulding zone;
e.2) each module (22, 24) has a cavity (23, 25) for cooling,
e.3) and is provided with two lateral guides (28, 26a, 30, 26b);
f.1) the modules (22, 24) are arranged next to one another in pairs perpendicular to the production direction of the corrugator;
f.2) the adjoining lateral guides (26a, 26b) of a module pair (22, 24) form a section of the central channel (26),
f.3) and the outer lateral guides (28, 30) of the module pair (22, 24) form the return guides of this section; and
g) several module pairs are arranged following one behind the other in the production direction of the corrugator.

2. A corrugator in accordance with Claim 1, characterised in that, each module (40) is made with such symmetry that each of the two lateral guides (52, 80) can function by choice either as a section of the central channel or as a section of the return guide.

3. A corrugator in accordance with Claims 1 or 2, characterised in that, the length (nE) of each module (150) in the production direction substantially amounts to a integral multiple (n) of a unit length (E).

4. A corrugator in accordance with at least one of the Claims 1 to 3, characterised in that, a spray cooling device (36, 38) is provided which stretches substantially over the whole length of the cavities (23, 25) of the module pairs (22, 24) running parallel and which sprays the coolant substantially onto the wall of the cavity adjoining the central channel (26).

5. A corrugator in accordance with Claim 4, characterised in that, the spray cooling device (36, 38) is also designed for spraying the coolant onto the walls of the cavity (23, 25) adjoining the return guide (28, 30).

6. A corrugator in accordance with Claim 5, characterised in that, on the outside of the return guides (110, 114) contact devices (116, 118) are provided which press the mould halves into the return guides.

7. A corrugator in accordance with Claim 6, characterised in that, the contact device is designed in the form of plates (116, 118) which are each pressed upon by at least a spring.

8. A corrugator in accordance with at least one of the Claims 1 to 7, characterised in that, a series of modules (122, 126) situated behind one another in the direction of production are designed to be movable with respect to the other opposing series of modules (124, 128).

9. A corrugator in accordance with at least one of the Claims 4 to 8, characterised in that, the cavity wall adjoining the central channel is provided with one or more openings and that a device for generating an over-pressure or an under-pressure which can be connected to the cavity is provided.

10. A corrugator in accordance with at least one of the Claims 4 to 9, characterised in that, the cavity wall adjoining the return guide is provided with one or more openings and that a device for generating an under-pressure which can be connected to the cavity is provided.

11. A corrugator in accordance with at least one of the Claims 1 to 10, characterised in that, the modules are cast components, preferably cast iron components.

12. A corrugator in accordance with at least one of the Claims 1 to 11, characterised in that, an uncoupling device connected to an energy accumulator device is provided which is triggered off by a predetermined failure condition and which removes the corrugator from an in-line extruder.

## Revendications

1. Dispositif de rainurage pour le nervurage de tubes en matière plastique, comportant
a) deux chaînes de moitiés de pièces profilées tournant de façon synchrone ;
b.1) des moyens de guidage pour les moitiés de pièces profilées composés
b.2) d'une zone d'entrée dans laquelle lesdites moitiés de pièces associées viennent s'appliquer l'une contre l'autre,
b.3) d'une zone de formage dans laquelle un canal central est prévu pour le guidage des moitiés de pièces appliquées l'une contre l'autre, et
b.4) d'une zone de sortie dans laquelle les moitiés de pièces sont à nouveau séparées les unes des autres ;
c) des guidages de retour pour les moitiés de pièces profilées entre la zone de sortie et la zone d'entrée ; et
d) des dispositifs de refroidissement pour refroidir au moins le canal central à l'aide d'un agent refroidisseur,
caractérisé par les propriétés suivantes :
e.1) plusieurs modules à profilés creux (22, 24) sont prévus pour former la zone de formage ;
e.2) chaque module (22, 24) comporte une cavité (23, 25) pour le refroidissement
e.3) et est pourvu de deux guidages latéraux (28, 26a ; 30, 26b) ;
f.1) deux modules (22, 24) sont disposés par paire, l'un contre l'autre, transversalement au sens de production du dispositif de rainurage ;
f.2) les guidages latéraux voisins (26a, 26b) d'une paire de modules (22, 24) définissent une section du canal central (26),
f.3) et les guidages latéraux extérieurs (28, 30) de la paire de modules (22, 24) définissent les guidages de retour de cette section ;
g) dans le sens de production du dispositif de rainurage, plusieurs paires de modules sont disposées les unes derrière les autres et les unes à la suite des autres.

2. Dispositif de rainurage selon la revendication 1, caractérisé en ce que chaque module (40) est conçu de façon symétrique pour que chacun des deux guidages latéraux (52, 80) puisse servir au choix de section du canal central ou de section du guidage de retour.

3. Dispositif de rainurage selon la revendication 1 ou 2, caractérisé en ce que la longueur (nE) de chaque module (150) est sensiblement égale à un multiple entier (n) d'une longueur unitaire (E) dans le sens de production.

4. Dispositif de rainurage selon l'une au moins des revendications 1 à 3, caractérisé en ce qu'il est prévu à chaque fois un dispositif de refroidissement par projection (36, 38) qui s'étend sensiblement sur toute la longueur des cavités parallèles (23, 25) des paires de modules (22, 24) et qui projette l'agent refroidisseur sensiblement contre la paroi de la cavité qui est voisine du canal central (26).

5. Dispositif de rainurage selon la revendication 4, caractérisé en ce que le dispositif de refroidissement par projection (36, 38) est également conçu pour projeter l'agent refroidisseur contre les parois de la cavité (23, 25) qui sont voisines du guidage de retour (28, 30).

6. Dispositif de rainurage selon la revendication 5, caractérisé en ce qu'il est prévu, à l'extérieur, au niveau des guidages de retour (110, 114), des dispositifs presseurs (116, 118) qui pressent les moitiés de pièces profilées dans le guidage de retour.

7. Dispositif de rainurage selon la revendication 6, caractérisé en ce que les dispositifs presseurs sont conçus comme des plaques (116, 118) qui sont pressées par l'intermédiaire d'un ou plusieurs ressorts respectifs.

8. Dispositif de rainurage selon l'une au moins des revendications 1 à 7, caractérisé en ce que la première rangée de modules (122, 126) placés les uns derrière les autres dans le sens de production est conçue pour pouvoir être déplacée par rapport à la seconde rangée de modules opposée (124, 128).

9. Dispositif de rainurage selon l'une au moins des revendications 4 à 8, caractérisé en ce que la paroi de cavité voisine du canal central est pourvue d'une ou plusieurs ouvertures, et en ce qu'un dispositif apte à être relié à la cavité est prévu pour produire une dépression et/ou une surpression.

10. Dispositif de rainurage selon l'une des revendications 4 à 9, caractérisé en ce que la paroi de cavité voisine du guidage de retour est pourvue d'une ou plusieurs ouvertures, et en ce qu'un dispositif apte à être relié à la cavité est prévu pour produire une dépression.

11. Dispositif de rainurage selon l'une au moins des revendications 1 à 10, caractérisé en ce que les modules sont des pièces en fonte, de préférence en fonte grise.

12. Dispositif de rainurage selon l'une au moins des revendications 1 à 11, caractérisé en ce qu'il est prévu un dispositif de déverrouillage pourvu d'un dispositif accumulateur d'énergie qui est déclenché dans le cas d'une condition de panne prédéfinie et éloigne le dispositif de rainurage d'une extrudeuse associée.
